Europäisches Patentamt

European Patent Office

Office européen des brevets

(11) Publication number: **0 256 509 B1**

## EUROPEAN PATENT SPECIFICATION

(45) Date of publication of patent specification: **06.05.92**   (51) Int. Cl.⁵: **B29C 65/08**

(21) Application number: **87111682.8**

(22) Date of filing: **02.07.85**

(60) Publication number of the earlier application in accordance with Art.76 EPC: **0 187 823**

(54) **Ultrasonic spot welding assembly and method.**

(30) Priority: **12.07.84 US 630190**
   **21.03.85 US 714275**

(43) Date of publication of application:
   **24.02.88 Bulletin 88/08**

(45) Publication of the grant of the patent:
   **06.05.92 Bulletin 92/19**

(84) Designated Contracting States:
   **AT BE CH DE FR IT LI LU NL SE**

(56) References cited:
   **EP-A- 0 008 362**
   **FR-A- 2 079 944**
   **FR-A- 2 084 015**

(73) Proprietor: **REYNOLDS CONSUMER PRODUCTS, INC.**
   **670 North Perkins Street**
   **Appleton Wisconsin 54913(US)**

(72) Inventor: **Bach, Gary**
   **1409 N. Graceland Street**
   **Appleton Wisconsin 54911(US)**

(74) Representative: **Abitz, Walter, Dr.-Ing. et al**
   **Abitz, Morf, Gritschneder, Freiherr von Wittgenstein Postfach 86 01 09**
   **W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

This invention relates to an ultrasonic welding apparatus. More particularly, this application relates to a spot welding tip for an ultrasonic welding apparatus and to a method of spot welding sheet material.

Ultrasonic welding has been used for bonding in a number of materials. Most commonly, ultrasonic bonding is utilized in thermoplastic materials. Recently, it has been discovered that ultrasonic spot welding could be accomplished. See, for example, the November-December 1980 issue of Plastics Design Forum, page 86. This publication describes techniques of ultrasonic spot welding as well as the advantages in producing a clean appearance on the surface opposite the weld. This article describes a process for welding two thermoplastic sheets together wherein a standard welding tip penetrates one sheet and extends halfway through the second. The article further addresses the possibility of inverse spot welding, that is, fitting the welding tip to a mounting fixture or anvil, and utilizing a flat-faced horn to provide ultrasonic energy.

The use of ultrasonic spot welding is further described in an article entitled "Ultrasonic Assembly," by R.A. Clarke published in the 1980-81 Modern Plastics Encyclopedia, page 447-450. In this article, Clarke discloses the general advantages of an annular ring design in the horn or tip for ultrasonic spot welding.

Means and a method for spot welding in accordance with the prior art portions of claims 1 and 30 are known from US-A-3,563,822. In this prior art system, the welding means is a blunt, conical or frusto conical extension of the utrasonic horn which is inserted into the obverse face of said juxtaposed sheet a distance equal to the height of said extension of the ultrasonic horn.

Weld joints made by these prior art methods and systems suffer from insufficient strength.

The invention as claimed in claims 1 and 30 solves the problem of how to improve the strength of weld joints made by the application of ultrasonic energy by thermoplastic sheets. By the method and system of the invention, a free flow of melted thermoplastic material away from the weld joint and tip is permitted during the welding process. It has been found that the accumulation of melted material in this region would otherwise interfere with the continued melting of the unmelted material at the weld joint as it would adsorb ultrasonic energy and so lend itself to thermal degradation which may result in a weld joint of insufficient strength.

Furthermore, this melted material would cause overheating of the weld tip configuration, which can damage the welds and surrounding sheet material.

The welding tip can include a plurality of conical projections interspersed with a plurality of reservoir portions. The conical projections are placed in contact with the material to be welded and ultrasonic energy is applied to the material. The ultrasonic energy is concentrated and the melt is dispersed by the conical projections and heats the sheet material adjacent to these projections to thereby soften the material. The softened material is displaced by the conical projections and is gathered in reservoir portions of the tip which are provided for accumulation of the displaced material. The material continues to be softened and displaced until the conical projections are substantially fully inserted into the sheet material. The conical projections in the preferred embodiments are right circular conical, right circular frusto-conical or pyramid in shape or are configured so as to allow self-release of the sheet material therefrom. The reservoirs are constructed with a volume significantly greater than the volume of the conical projection in order to allow for expansion in the displaced material.

A plurality of weld tip configurations are provided on a common support and the welding tips on the anvil of each are selectively removable to provide different weld tip configurations depending on the characteristics of the materials being welded.

The weld tip support is disposed along a weld line and the ultrasonic energy is applied by a welding horn extending along the weld line. The welding horn tends to generate weaker ultrasonic energy in peripheral regions, such as those adjacent the distal ends of the welding horn. Accordingly, to compensate for the weaker ultrasonic energy in these regions, the tips may be made slightly longer than in intermediate regions or the tips may be disposed in more shallow counterbores in the associated anvils to engage a greater diameter of the tip therefore displacing more material. An alternative approach would be to employ a welding horn of greater length than the weld line to avoid edge effects.

In a first preferred embodiment of the present invention, the welding tips are right circular cones with heights A above the anvil and base diameters B at the anvil. An ideal ratio of A/B is 1.2 in a first preferred embodiment and 0.76 in a second preferred embodiment. With these ratios, the tips are self-releasing and also penetrate sheet material with a minimum of energy.

The welding tip may be removed from contact with the sheet material by displacement only in a direction parallel to the line along which the spot welds are produced.

Several examples of the invention will be described in more detail below with reference to drawings, in which:

Figure 1 is a perspective of a portion of a welding tip of the present invention;

Figure 2 is a schematic perspective of the use of the welding tip of the present invention in welding sheet material in an inverse spot welding process;

Figure 3 is a perspective of a portion of the welding tip of the present invention illustrating the provision of cooling passages therein; and

Figure 4 is a perspective of a portion of a welding tip according to the teachings of the present invention in which the semi-spherical reservoirs are replaced by troughs disposed adjacent the cylindrical projections and parallel to the weld line.

Figure 5 is a perspective of a welding tip configuration of a first preferred embodiment of the present invention;

Figure 6 is an enlarged frontal view of a single welding tip of the first preferred embodiment of the present invention;

Figure 7 is a schematic side view of the operation of a single welding tip of the type illustrated in Figure 6 for welding sheet material in an inverse spot welding process utilizing a positive stop for the weld horn;

Figure 8 is a top planar view of an anvil support bar illustrating a plurality of weld tip groups extending along a weld line; and

Figure 9 is a second preferred embodiment of a weld tip according to the present invention for welding sheet material in an inverse spot welding process which permits the elimination of the positive stop of Figure 7.

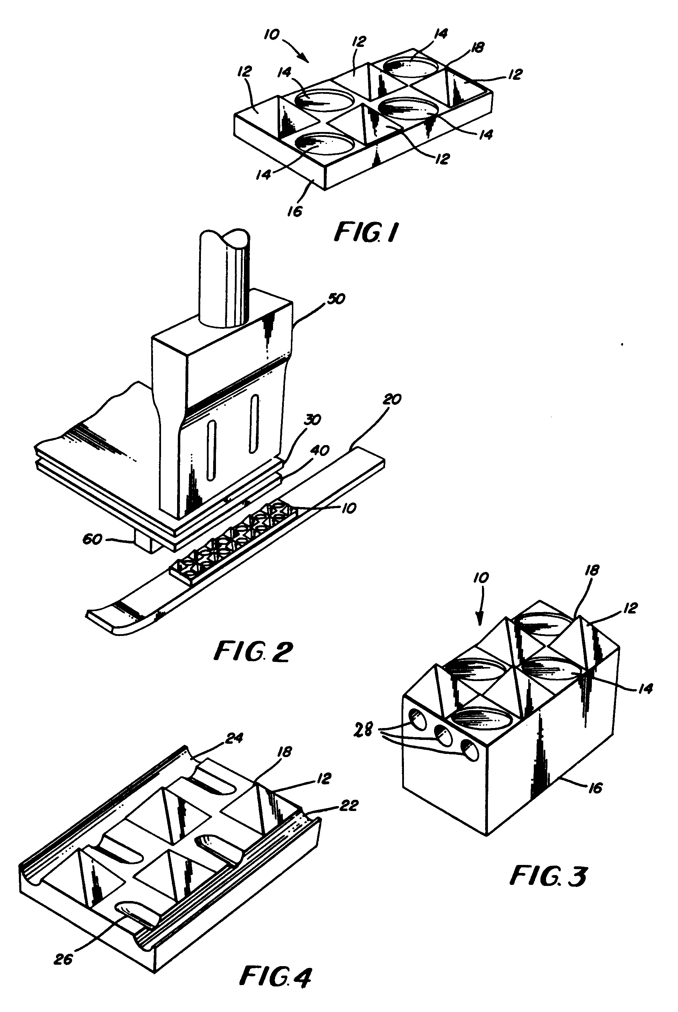

Referring to figure 1, the welding tip of the present invention (generally indicated as 10) includes a plurality of conical projections 12 alternately interspersed with a plurality of reservoirs 14 along a tip base 16. The conical projections 12 serve to concentrate ultrasonic energy where they contact the sheet material at their respective apices 18. While the conical projections may be formed in any shape suitable for concentrating the ultrasonic energy and facilitating self-release which will be described hereinbelow, figure 1 illustrates one form of cone. It should be noted, that the term cone is intended to encompass its broadened meaning and is not intended to limit the present application to the right circular cone which is merely one embodiment of cone utilizable in the welding tip of the present invention.

In a welding tip such as that illustrated in figure 1, the distance between cone apex and base should be configured to equal approximately one and one-half times the thickness of the sheet material to be welded. Further, the cone base is desirably constructed with a width of approximately twice the cone's height or about three times the thickness of the sheet material to be bonded.

Figure 2 of the present application illustrates the use of the tip 10 of figure 1 in an inverse ultrasonic spot welding process. To facilitate inverse ultrasonic spot welding, the welding tip 10 is securely fastened to an anvil or mounting bar 20 which is positioned on one side of two sheets of material to be welded 30, 40. Figure 2 further illustrates the placement of an ultrasonic transducer or horn 50 on the other side of the sheets of material to be bonded by spot welding according to the teachings of the present invention.

The spot welder schematically illustrated in figure 2 functions as follows. The material to be bonded is supported by a support 60 with the first and second sheets 30, 40 juxtaposed along the desired lines to be welded. The tip 10 of the present invention is presented into contact with one side of the juxtaposed first and second sheets of material 30, 40 by movement of the anvil 20 upon which it is disposed. Simultaneously, the ultrasonic transducer or horn 50 is moved in a line perpendicular to the plane of the respective sheets of materials in order to engage the other side of the sheets. Ultrasonic energy is applied to the sheets of material to be bonded via the ultrasonic horn 50. As the conical projections 12 of the welding tip 10 contact the sheet material at alternating spots therealong, the ultrasonic energy is concentrated at these spots. The sheet material is thereby softened and displaced by contact with the conical projections 12. The sheet material which is softened is accumulated in reservoirs 14 to remove the material from the area of ultrasonic energy concentration to avoid overheating of the softened material and to concentrate the ultrasonic energy on unsoftened material.

When the spot welds have been completed to their desired depth with the conical projections fully inserted into the sheet material, the ultrasonic energy is withdrawn. Cooling of the sheet thermoplastic causes shrinkage thereof. The configuration of the conical projections 12 is such that the welding tip self-releases from the sheet material. Thus, the configuration of the welding tip of figure 1 facilitates self-release of the tip from the sheet material after welding and produces improved welds by providing reservoirs for accumulating the softened sheet material juxtaposed to the conical projections 12.

While the figure 2 embodiment of the present invention illustrates the technique known as inverse spot welding, it is possible to utilize the welding tip of the present invention in normal spot welding by affixing the tip to the ultrasonic horn 50.

The reservoirs 14 of the figure 1 welding tip are semi-spherical in shape and are typically sized to accumulate about 1.5 times the volume displaced by an associated conical projection. The volume of each reservoir should be at least 1 and 1/3 times the volume of an associated conical projection.

When the system of the present invention is utilized in automated production, residual heat buildup within the welding tip can be troublesome. Without adequate precautionary measures, the temperature of the welding tip can become sufficient to cause the sheet material to melt to the welding tip. Referring to figure 3, where like numerals designate like parts with figure 1, cooling passages 28 may be provided within the welding tip 10 in order to control the temperature thereof. The temperature may then be controlled by controlling the flow rate of the coolant or by other means in order to maintain the welding tip to the desired temperature. With polyethylene, it is desirable to maintain the temperature at about 32°C. When the welding tip reaches 54.4 to 60°C the polyethylene begins to stick to the tip. The weld tip 10 of the present invention may be either made integral with the anvil 20 or may be made replaceably fixable thereto.

In the specific application for which the system of the present invention is utilized, it is necessary to move the anvil 20 and weld tip 10 into place by moving the anvil in a direction parallel to the weld line produced. No significant movement perpendicular to the plane of the sheet materials is therefore permitted in this embodiment. Therefore, it is desirable to configure the weld tip so as to easily slide away from the completed weld along a direction parallel to the weld line.

In figure 4, where like elements are also designated by like numerals, a modified weld tip is illustrated wherein the semispherical reservoirs of figure 1 are replaced by a pair of peripheral troughs 22, 24 arranged on either side of the alternately arranged conical projections 12. These troughs 22, 24 are fed by a plurality of feeder trough reservoir portions 26 which direct the molten sheet material into troughs 22, 24 for collection. Upon completion of the weld, the weld tip of figure 4 may be more easily removed from juxtaposition with the sheet material in a direction parallel to the weld line as there is no significant accumulation of material between the interspersed conical projections 12 in the area where the reservoirs 14 of the figure 1 embodiment would otherwise accumulate material. Therefore, the lateral movement of the weld tip may be more easily facilitated.

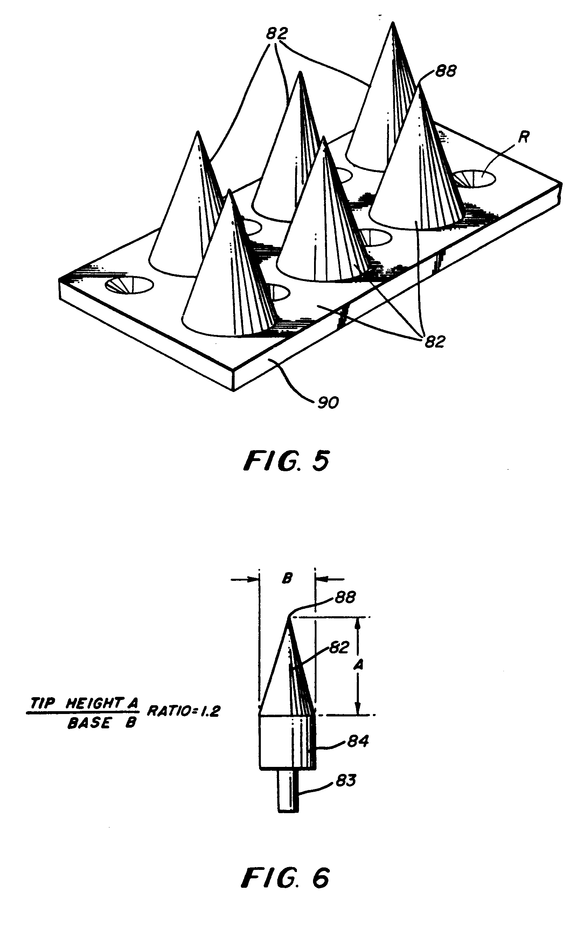

Referring to figure 5, a single group of welding tips (generally indicated as 10) includes a plurality of staggered conical projections 82 removably mounted within the anvil body 90 or support plate 90. A plurality of optional drill-formed well reservoirs R may be provided between projections 82. A plurality of such welding groups would typically be disposed along a welding line. The conical projections 82 serve to concentrate ultrasonic energy and disperse the melt where they contact the sheet material at their respective apices 88. While the conical projections 82 may be formed in any shape suitable for concentrating the ultrasonic energy and facilitating self-release, which will be described hereinbelow, figure 5 illustrates one form of cone. It should be noted that the term "cone" is intended to encompass its broadened meaning and is not intended to limit present application to a right-circular cone which is merely one embodiment of cone usable in the welding tips of the present invention. For example, a pyramid also falls within the generic definition of a cone.

Figure 6 is an enlarged diagrammatic illustration of a single welding tip of a first preferred embodiment of the present invention. Welding tip 81 is a single unit comprising a shank 83, a base portion 84 having a diameter B and a conical projection 82 of a height A extending upwardly from this base portion. In a welding tip such as that illustrated in figure 6, the distance of height A between cone apex 88 and its junction with based portion 84 should be configured to equal approximately three times the thickness of a single sheet of material of two equal thickness sheets to be welded together. Further, the tip is preferably constructed such that the ratio of height A to width B of base portion 84 equals approximately 1.2.

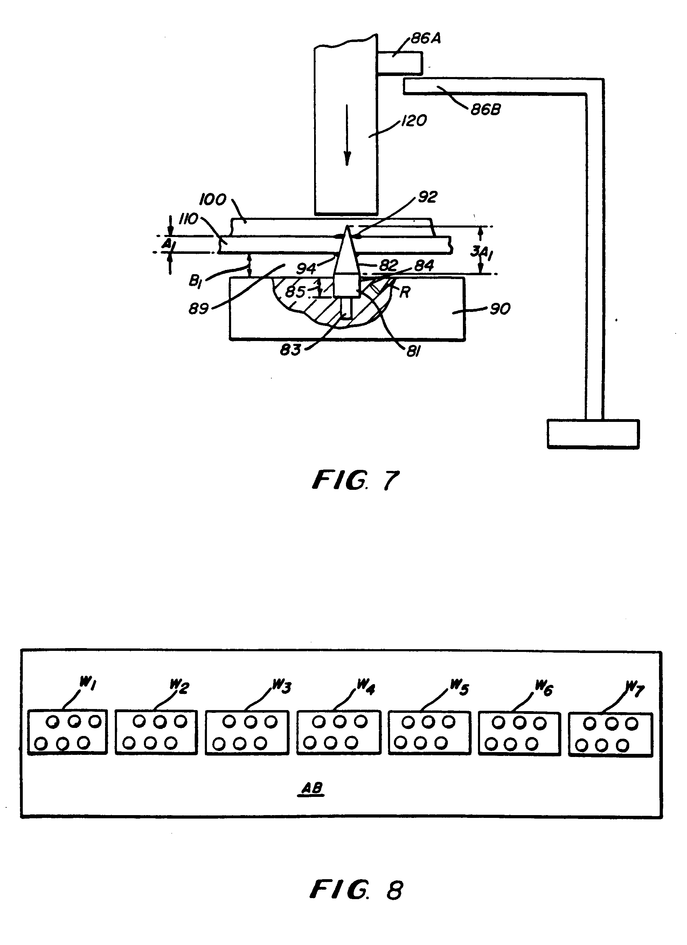

Figure 7 is a diagrammatic side elevational view illustrating the operation of a single welding tip 81 of the present invention for welding sheet material in an inverse spot welding process. To facilitate inverse ultrasonic spot welding, the welding tip 81 is fastened to a stationary anvil or mounting bar 90, which is positioned on one side of two substantially equal thickness sheets of material 100, 110 to be welded together. Figure 7 further illustrates the placement of a movable horn 120 on the opposite side of the sheets of material to be bonded by spot welding according to the teachings of the present invention. A positive stop 86A mounted on the horn 120 is operatively associated with a stationary stop 86B to limit the downward stroke of the horn. As horn 120 is lowered, it pushes sheets 100 and 110 against welding tip 81, causing cone 82 to pierce sheet 110 and penetrate sheet 100 by approximately half its thickness. The degree of pentration is, of course, controlled by the positions of stops 86A, 86B. Therefore, approximately 1.5 sheet thicknesses $A_1$ are penetrated by cone 82. Cone 82 has a height of approximately $3A_1$ (3 times the sheet thickness). Accordingly, a free reservoir space 89 of a thickness $B_1$ results between sheet 110 and anvil 90.

Ultrasonic energy is applied to the sheets of material to be bonded via the ultrasonic horn 120. As the plurality of conical projections 82 of the ultrasonic welding tips 81 penetrate the sheet material along the weld line, the ultrasonic energy is concentrated and the melt is dispersed at these spots. The sheet material is thereby softened, forming melt pools 92 between the sheets. Molten material, as at 94 is also accumulated in the free space 89 between anvil 90 and sheet 110. As stated hereinbefore, space 89 is created by stops 86A and 86B which allows the cones 82 to be inserted only through sheet 110 and approximately half the sheet thickness into sheet 100. The back flow of molten material produced by the ultrasonic welding action literally hangs at 94 from the sheets 100, 110 above the anvil 90. The free flow of the molten sheet material effectively removes a substantial portion of molten material from the region of the ultrasonic energy concentration and avoids overheating of the molten material so removed. Thus, ultrasonic energy can be better concentrated on unsoftened material to continue the welding process.

When the spot welds have been completed to their desired depth (1.5 times the thickness of the bottom sheet 110, the positive stops 86A, 86B controlling this distance), the application of ultrasonic energy is terminated. Cooling of the sheet thermoplastic causes shrinkage thereof. The configuration of the conical projections 82 is such that the cone 82 of welding tip 81 self-releases from the sheet material.

Thus, the configuration of the welding tip of figures 5, 6 and 7 facilitates self-release of the tip from the sheet material after welding and produces improved welds by providing a natural reservoir space for accumulating a substantial portion of the softened or molten sheet material flowing from positions juxtaposed to the conical projections 82.

Further, the pointed and elongated tip portion 82 with a height-to-base ratio of approximately 1.2, as illustrated in figure 6, allows for an enhanced piercing action through the sheet material which requires less load on the power supply during the welding process and still provides adequate weld strength.

Still further, the taper on the conical projection 82 is about 45°, resulting in less displaced melted sheet material and provides a cosmetically more acceptable weld.

While the figure 7 embodiment of the present invention illustrates the technique known as inverse spot welding, it is also possible to utilize the tip of the present invention in normal spot welding by affixing the tip to the ultrasonic horn 120.

The outer zones of an ultrasonic welding horn 120, typically generate lower amplitude ultrasonic energy and therefore produce weaker welds at the outer peripheral zones of the horn. In accordance with the present invention as illustrted in figure 8, weld tip groups $W_1$ and $W_7$ in the peripheral outer zones of an anvil support bar AB have a counterbore depth (85, figure 7) for placement of the base of the removably mounted tips which is about 0.25 mm (0.010 inches) shallower than the counterbores of the remaining tip groups $W_2$ to $W_6$ on the anvil support bar along the weld line. Thus, cones 82 in tip groups $W_1$ and $W_7$ penetrate further into sheets 100, 110. This compensates for the inherent feature of lower power output at outer zones of the ultrasonic horn 120.

The shanks 83 and bases 84 of welding tips 11 are removably mounted in the anvil body 90 in counterbore sockets, as illustrated in figure 7, for ease of maintenance and replacement. More importantly, the number of tips in each grouping and the size of the tips in each grouping on the anvil may be easily changed to vary the optimum weld strength along a weld line. This permits the welding of a wider variety of polymer materials and/or a wider range of varying sheet thicknesses even though generally more melt pools per grouping will result in a higher tensil strength per group.

In the preferred embodiment, the welding tips of the present invention are utilized to spot weld high-density polyethylene sheets. However, any suitable material may be welded utilizing the welding apparatus of the present invention.

Similarly, in the present invention, the welding horn could be made of any suitable material as can the welding tips of the present invention. In the preferred embodiments, the welding tips 81 are manufactured of aluminum and are then hard-coat anodized for better abrasion resistance. The tip is then treated with polytetrafluorethylene, known under the trademark "TEFLON", to prevent surface sticking. Further, the welding tips 81 can also be manufactured from other materials such as carbonized steel with proper heat treatment.

Previously, the use of this type system in automated production resulted in residual heat buildup within the welding tip. Cooling passages had to be provided within the anvils in order to control the temperature of the welding tips. In the present invention proper tip geometry and number of tips per group along the weld line reduce residual heat buildup as disclosed hereinabove. Still further, since the anvil never contacts the molten material or sheets being welded, less heat is applied to the anvil.

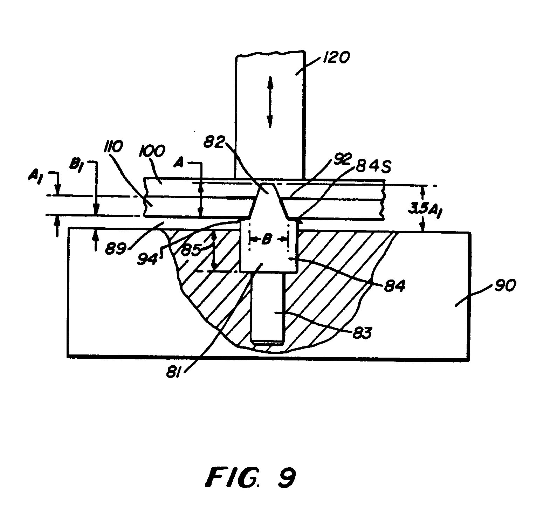

Figure 9 is an enlarged diagrammatic illustration of a single welding tip of a second preferred embodiment of the present invention as utilized in an inverse welding process. Welding tip 81 is a single unit comprising a shank 83, a base portion 84 having a diameter B and a frusto-conical projection 82 of a height A extending upward from this base portion. It should be understood that the welding tip of figure 9 may be substituted for the welding tip of figure 6 in the illustrations of figures 5 and 8 according to the present invention. In a welding tip such as that illustrated in figure 9, the distance of height A between the distal end cone and its junction with base portion 84 should be configured to equal approximately one and one-half times the thickness of a single sheet of material of two equal thickness sheets to be welded together. Further, the tip is preferably constructed such that the ratio of height A to width B of base portion 84 equals approximately 0.76.

Figure 9 also illustrates the operation of the second preferred embodiment of a single welding tip 81 of figure 9 for welding sheet material in an inverse spot welding process. To facilitate inverse ultrasonic spot welding, the welding tip 81 is fastened to a stationary anvil or mounting bar 90, which is positioned on one side of two substantially equal-thickness sheets of material 100, 110 to be welded together. Figure 9 further illustrates the placement of a movable horn 120 on the opposite side of the sheets of material to be bonded by spot welding according to the teachings of the present invention.

With the welding tip of figure 9, the positive stop 86A of figure 7 may be eliminated or, if desired, it may be retained. As horn 120 is lowered, it pushes sheets 100 and 110 against weld tip 81, causing frusto-conical tip 82 to pierce sheets 110 and penetrate sheet 100 by more than half its thickness. The degree of penetration is, of course, controlled by the height of the frusto-conical tip 82 above the shoulder 84S of base 84 of the welding tip 81. Therefore, more than 1.5 sheet thicknesses $A_1$ are penetrated by frusto-conical tip 82. The height of frusto-conical tip 82 plus the extension of base 84 above the top of anvil body 20 is approximately 3.5 $A_1$ (3.5 times the sheet thickness). Accordingly, a free reservoir space 89 of a thickness $B_1$ results between sheet 110 and anvil 90.

Ultrasonic energy is applied to the sheets of material to be bonded via the ultrasonic horn 120. As the plurality of conical projections 82 of the ultrasonic welding tips 82 penetrate the sheet material along the weld line, the ultrasonic energy is concentrated at these spots. The sheet material is thereby softened, forming melt pools 92 between the sheets. Molten material, as at 94, is also accumulated in the free space 89 between anvil 90 and sheet 110. As stated hereinbefore, space 89 is created by the extension of base 84 and shoulder 84S above the top of anvil 90, which allows the frusto-conical tips 82 to be inserted to the controlled depth of the tips' height into sheets 100, 110. As in the figure 7 embodiment, the back flow of molten material produced by the ultrasonic welding action literally hangs at 94 from the sheets 100, 110 above the anvil 90. The free flow of the molten sheet material effectively removes a substantial portion of molten material from the region of the ultrasonic energy concentration and avoids overheating of the molten material so removed. Thus, ultrasonic energy can be better concentrated on unsoftened material to continue the welding process.

When the spot welds have been completed to their desired depth (the shoulder 84S of base 84 controlling this distance), the application of ultrasonic energy is terminated. Cooling of the sheet thermoplastic causes shrinkage thereof. The configuration of the frusto-conical tips 82 is such that the tip 82 of welding tip 81 self-releases from the sheet material.

Further, the shoulder 84S of base 84 as it extends a distance $B_1$ above the top of the anvil body 90 also disperses evenly and radially the molten material between the juxtaposed sheets, producing a uniform, and therefore stronger, weld due to the pressure exerted on the sheets 100 and 110 by the horn 120 against the shoulder 84S of base 84.

Still further, the taper on the frusto-concial tip 82 has an included angle of approximately 45°, resulting in less displaced melted sheet material and provides a cosmetically more acceptable weld.

The present invention can be used to spot weld sheet thermoplastic material.

It should become apparent to one of ordinary skill in the art that various changes and modifications may be made in the device of the present invention which are within the contemplation of the inventor. Thus, the scope of the present application should not be construed as limited by the specification or drawings thereof, but must be determined from review of the claims included herewith.

## Claims

1. Means for spot welding sheet material (30, 40; 100, 110) comprising:
    ultrasonic energy application means (50;

120) for providing ultrasonic vibrational energy to heat said material (30, 40; 100, 110) and

means (12; 82) for concentrating said ultrasonic vibrational energy at desired spots to be welded;

characterized by

reservoir means (14; 26; 89) adjacent said spots but spaced therefrom for receiving material displaced from juxtaposition with said means (12; 82) for concentrating to thereby strengthen the resulting welds.

2. The means of claim 1 wherein said means for concentrating includes a conical projection (12; 82) corresponding to each spot to be welded, said conical projections (12; 82) being configured so as to self release from said sheet material.

3. The means of claim 1 further including means (20, 90) for placing said ultrasonic application means (50, 120) and said means (12, 82) for concentrating into contact with said sheet material (30, 40; 100, 110) along a seam to be welded and for maintaining said contact until welding is completed.

4. The means of claim 3 wherein said means for concentrating includes a conical projection (12, 82) corresponding to each spot to be welded, said conical projections (12) being configured so as to self release from said sheet material.

5. The means of claim 4 wherein said cones are right circular cones (82).

6. The means of claim 4 wherein said cones are pyramides (12).

7. The means of claim 4 wherein said reservoir means includes a reservoir (14) associated with each conical projection (12, 82).

8. The means of claim 7 wherein each reservoir (14) has a volume at least 1 and 1/3 the volume of its associated conical projection (12)

9. The means of claim 4 wherein the total volume of said reservoir means is at least 1 and 1/3 the total volume of said conical projections.

10. The means of claim 3 further comprising means (28) for cooling said means (12) for concentrating so as to maintain said temperature below a temperature which would cause said mateial (30, 40) to stick to said means (12) for concentrating.

11. The means of claim 3 wherein said sheet material (30, 40) is a thermoplastic.

12. The means of claim 3:

(a) wherein the ultrasonic energy application means comprises ultrasonic generation means for producing ultrasonic energy and ultrasonic tranducer means (50) located on a first side of said sheet material (30, 40) for transmitting ultrasonic energy to said sheet material along said seam to form a weld line; and

(b) further including means (60) for supporting first and second sheets (30, 40) in juxtaposition along said weld line; and

(c) further including anvil means (20) for supporting said means for concentrating on a second side of said weld line.

13. The means of claim 12 wherein said means for placing and maintaining withdraws said transducer means (50; 120) and said means (12; 82) for concentrating from contact with said sheet material (30, 40; 100, 110) upon completion of said welds;

said means (12; 82) for concentrating being configured so as to facilitate self release from said sheet material (30, 40; 100, 110) as said material cools.

14. The means of claim 13 wherein said means for concentrating includes a conical projection (12; 82) corresponding to each spot welded, said conical projections being configured so as to self release from said sheet materil (30, 40; 100, 110).

15. The means of claim 14 wherein said sheet material is a thermoplastic.

16. The means of claim 14 wherein said reservoir means includes a plurality of reservoir portions (14) alternately interspersed with said conical projections along said anvil means.

17. The means of claim 16 wherein said reservoir portions (14) are semi-spherical in shape.

18. The means of claim 16 wherein said means for placing and maintaining lowers said transducer means (50; 120) into contact with said sheet material (30, 40; 100, 110) in a direction substantially perpendicular to the plane defined by said material.

19. The means of claim 13 wherein said means for placing and maintaining moves said anvil (20; 90) only in a lateral direction substantially parallel to said weld line;

said means (12; 82) for concentrating and said reservoir means (14; 26) being configured so as to easily separate from the welded sheet material (30, 40; 100, 110) by said lateral movement.

20. The means of claim 16 wherein said means for placing and maintaining moves said anvil (20; 90) only in a lateral direction substantially parallel to said weld line;

said conical projections (12; 82) and said reservoir portions (14; 26) being configured so as to easily separate from the welded sheet material (30, 40; 100, 110) by said lateral movement.

21. The means of claim 20 wherein said reservoir means includes a trough (22, 24) disposed adjacent said conical projections (12) substantially parallel to said weld line;

said trough (22, 24) being interconnected to said reservoir portions (26), said reservoir portions (26) channeling said displaced material into said trough (22, 24).

22. The means of claim 21 wherein a trough (22, 24) is provided on each side of said weld line.

23. The means of claim 16 wherein the volume of said resevoir portions (26) is at least 1 and 1/3 times the volume of said conical projections (12).

24. The means of claim 22 wherein the volume of said troughs (22, 24) and said reservoir portions (26) is at least 1 and 1/3 times the volume of said conical projections (12).

25. The means of claim 14 further comprising temperature control means (28) for cooling said conical projections (12) to prevent sticking of said sheet material (30, 40) thereto.

26. The means of claim 25 wherein said temperature control means includes cooling passages (28) within said anvil means (20).

27. The means of claim 16 wherein said reservoir portions (14; 26) and conical projections (12) are formed integrally as a welding tip (10).

28. The means of claim 27 wherein said welding tip (10) is formed integrally with said anvil means (20).

29. The means of claim 27 wherein said welding tip (10) is hard coat anodized.

30. A method of spot welding sheet material (30, 40; 100, 110) comprising:

ultrasonically applying vibrational energy to said sheet material (30, 40; 100, 110) to heat said material; and

concentrating said vibrational energy at spots desired to be welded;

characterized by

providing reservoirs (14; 26; 89) adjacent said spots for facilitating displacement of molten material produced by said heating process to strengthen the resulting welds.

**Revendications**

1. Appareil de soudage par points d'une matière en feuille (30, 40 ; 100, 110), comprenant

un dispositif (50 ; 120) d'application d'énergie ultrasonore destiné à transmettre de l'énergie vibrationnelle ultrasonore pour le chauffage de la matière (30, 40 ; 100, 110), et

un dispositif (12 ; 82) destiné à concentrer l'énergie vibrationnelle ultrasonore aux emplacements qui doivent être soudés,

caractérisé par

un réservoir (14 ; 26 ; 89) adjacent à ces emplacements mais distant de ceux-ci et destiné à recevoir la matière déplacée par la juxtaposition du dispositif (12 ; 82) de concentration de manière que les soudures résultantes soient renforcées.

2. Appareil selon la revendication 1, dans lequel le dispositif de concentration comporte une saillie conique (12 ; 82) correspondant à chaque point à souder, les saillies coniques (12 ; 82) ayant une configuration assurant leur séparation automatique de la matière en feuille.

3. Appareil selon la revendication 1, comprenant en outre un dispositif (20, 90) destiné à placer le dispositif (5 ; 120) d'application ultrasonore et le dispositif (12 ; 82) de concentration au contact de la matière en feuille (30 ; 40 ; 100, 110) le long d'une ligne à souder, et à maintenir le contact jusqu'à ce que le soudage soit terminé.

4. Appareil selon la revendication 3, dans lequel le dispositif de concentration comporte une saillie conique (12, 82) correspondant à chaque point à souder, les saillies coniques (12) ayant une configuration assurant leur séparation automatique de la matière en feuille.

5. Appareil selon la revendication 4, dans lequel les cônes sont des cônes de section droite circulaire (82).

**6.** Appareil selon la revendication 4, dans lequel les cônes sont des pyramides (12).

**7.** Appareil selon la revendication 4, dans lequel le réservoir comporte un réservoir (14) associé à chaque saillie conique (12, 82).

**8.** Appareil selon la revendication 7, dans lequel chaque réservoir (14) a un volume au moins supérieur d'un tiers au volume de la saillie conique associée (12).

**9.** Appareil selon la revendication 4, dans lequel le volume total du réservoir est au moins supérieur d'un tiers au volume total des saillies coniques.

**10.** Appareil selon la revendication 3, comprenant en outre un dispositif (28) de refroidissement des dispositifs (12) de concentration afin que sa température soit maintenue au-dessous de la température qui provoque un collage de la matière (30, 40) au dispositif (12) de concentration.

**11.** Appareil selon la revendication 3, dans lequel la matière en feuille (30, 40) est thermoplastique.

**12.** Appareil selon la revendication 3,
(a) dans lequel le dispositif d'application d'énergie ultrasonore comporte un dispositif générateur d'ultrasons destiné à créer de l'énergie ultrasonore et un dispositif transducteur ultrasonore (50) placé d'un premier côté de la matière en feuille (30, 40) et destiné à transmettre l'énergie ultrasonore à la matière en feuille le long de la ligne pour la formation d'une ligne de soudure,
(b) l'appareil comprenant en outre un dispositif (60) de support d'une première et d'une seconde feuille (30, 40) juxtaposées le long de la ligne de soudage, et
(c) l'appareil comprenant en outre une enclume (20) destinée à supporter le dispositif de concentration d'un second côté de la ligne de soudure.

**13.** Appareil selon la revendication 12, dans lequel le dispositif destiné à placer et à maintenir retire le dispositif transducteur (50 ; 120) et le dispositif (12 ; 82) de concentration du contact de la matière en feuille (30, 40 ; 100, 110) à la fin des soudures,
le dispositif (12 ; 82) de concentration ayant une configuration qui facilite la séparation automatique de la matière en feuille (30, 40 ; 100, 110) lorsqu'elle se refroidit.

**14.** Appareil selon la revendication 13, dans lequel le dispositif de concentration comprend une saillie conique (12 ; 82) correspondant à chaque point soudé, les saillies coniques ayant des configurations telles qu'elles se séparent automatiquement de la matière en feuille (30, 40 100, 110).

**15.** Appareil selon la revendication 14, dans lequel la matière en feuille est thermoplastique.

**16.** Appareil selon la revendication 14, dans lequel le réservoir comprend plusieurs parties (14) de réservoir disposées en alternance avec les saillies coniques le long de l'enclume.

**17.** Appareil selon la revendication 16, dans lequel les parties (14) de réservoir ont une forme hémisphérique.

**18.** Appareil selon la revendication 16, dans lequel le dispositif destiné à placer et maintenir abaisse le dispositif transducteur (50 ; 120) au contact de la matière en feuille (30, 40 ; 100, 110) en direction sensiblement perpendiculaire au plan de la matière.

**19.** Appareil selon la revendication 13, dans lequel le dispositif destiné à placer et maintenir déplace l'enclume (20 ; 90) uniquement en direction latérale sensiblement parallèle à la ligne de soudure,
le dispositif (12 ; 82) de concentration et le réservoir (14 ; 26) ayant des configurations telles qu'il se sépare facilement de la matière en feuille soudée (30, 40 ; 100, 110) par déplacement latéral.

**20.** Appareil selon la revendication 16, dans lequel le dispositif destiné à placer et maintenir déplace l'enclume (20 ; 90) uniquement en direction latérale sensiblement parallèle à la ligne de soudage,
les saillies coniques (12 ; 82) et les parties de réservoir (14 ; 26) ayant des configurations telles qu'elles se séparent facilement de la matière en feuille soudée (30, 40 ;100, 110) par déplacement latéral.

**21.** Appareil selon la revendication 20, dans lequel le réservoir comporte une rigole (22, 24) disposée près des saillies coniques (12) et sensiblement parallèle à la ligne de soudage,
la rigole (22, 24) étant reliée aux parties formant réservoir (26), ces parties formant réservoir (26) canalisant la matière déplacée dans la rigole (22, 24).

**22.** Appareil selon la revendication 21, dans lequel une rigole (22, 24) est placée de chaque côté de la ligne de soudage.

**23.** Appareil selon la revendication 16, dans lequel le volume des parties de réservoir (26) est supérieur d'au moins un tiers au volume des saillies coniques (12).

**24.** Appareil selon la revendication 22, dans lequel le volume des rigoles (22, 24) et des parties de réservoir (26) est supérieur d'un tiers au moins au volume des saillies coniques (12).

**25.** Appareil selon la revendication 14, comprenant en outre un dispositif (28) de réglage de température destiné à refroidir les saillies coniques (12) et à empêcher le collage de la matière en feuille (30, 40) à ces saillies.

**26.** Appareil selon la revendication 25, dans lequel le dispositif de réglage de température comprend des passages (28) de refroidissement à l'intérieur de l'enclume (20).

**27.** Appareil selon la revendication 16, dans lequel les parties du réservoir (14 ; 26) et les saillies coniques (12) sont formées en une seule pièce sous forme d'une tête de soudage (10).

**28.** Appareil selon la revendication 27, dans lequel la tête de soudage (10) est formée en une seule pièce avec l'enclume (20).

**29.** Appareil selon la revendication 27, dans lequel la tête de soudage (10) porte un revêtement dur anodisé.

**30.** Procédé de soudage par points d'une matière en feuille (30, 40 ; 100, 110), comprenant :
l'application d'énergie vibrationnelle d'ultrasons à la matière en feuille (30, 40 ; 100, 110) afin que la matière s'échauffe, et
la concentration de l'énergie vibrationnelle en des points qui doivent être soudés,
caractérisé par
la formation de réservoirs (14 ; 26 ; 89) à proximité des points de manière que le déplacement de la matière fondue produite par l'opération de chauffage soit facilité et que les soudures résultantes soient renforcées.

**Patentansprüche**

**1.** Einrichtung zum Punktschweißen von Folienmaterial (30, 40; 100, 110) mit
einer Ultraschallenergiebeaufschlagungseinrichtung (50; 120) zum Erzeugen von Ultraschallschwingungsenergie zum Erhitzen des Materials (30, 40; 100, 110) und
einer Einrichtung (12; 82) zum Konzentrieren der Ultraschallschwingungsenergie an den gewünschten, zu verschweißenden Punkten;
gekennzeichnet durch
eine Reservoireinrichtung (14; 26; 89) bei den Punkten, jedoch im Abstand von ihnen zum Aufnehmen von Material, das aus der Nähe der Einrichtung (12; 82) zum Konzentrieren verdrängt worden ist, um dadurch die sich ergebenden Schweißungen zu verstärken.

**2.** Die Einrichtung nach Anspruch 1, wobei die Einrichtung zum Konzentrieren ein konischer Vorsprung (12; 82) entsprechend jedem zu schweißenden Punkt ist, wobei die konischen Vorsprünge (12; 82) eine solche Gestalt haben, daß sie sich von dem Folienmaterial selbst ablösen.

**3.** Die Einrichtung nach Anspruch 1, mit einer Einrichtung (20, 90) zum Anordnen der Ultraschallbeaufschlagungseinrichtung (50, 120) und der Konzentrierungseinrichtung (12, 82) in Kontakt mit dem Folienmaterial (30, 40; 100, 110) entlang einer zu schweißenden Naht und zum Aufrechterhalten des Kontaktes, bis die Schweißung vollendet ist.

**4.** Die Einrichtung nach Anspruch 3, wobei die Konzentrierungseinrichtung einen konischen Vorsprung (12, 82) entsprechend jedem zu schweißenden Punkt aufweist, wobei die konischen Vorsprünge (12) eine solche Gestalt haben, daß sie sich von dem Folienmaterial selbst ablösen.

**5.** Die Einrichtung nach Anspruch 4, wobei die Konen gerade, kreisförmige Konen (82) sind.

**6.** Die Einrichtung nach Anspruch 4, wobei die Konen Pyramiden (12) sind.

**7.** Die Einrichtung nach Anspruch 4, wobei die Reservoireinrichtung ein Reservoir (14) ist, das jedem konischen Vorsprung (12, 82) zugeordnet ist.

**8.** Die Einrichtung nach Anspruch 7, wobei jedes Reservoir (14) ein Volumen von wenigstens dem 1 1/3fachen des Volumens des zugeordneten konischen Vorsprungs (12) hat.

**9.** Die Einrichtung nach Anspruch 4, wobei das Gesamtvolumen der Reservoireinrichtung wenigstens das 1 1/3fache des Gesamtvolumens der konischen Vorsprünge beträgt.

**10.** Die Einrichtung nach Anspruch 3, mit einer Einrichtung (28) zum Kühlen der Konzentrierungseinrichtung (12), um so die Temperatur unterhalb einer Temperatur zu halten, die ein Kleben des Materials (30, 40) an der Konzentrierungseinrichtung (12) verursachen würde.

**11.** Die Einrichtung nach Anspruch 3, wobei das Folienmaterial (30, 40) ein Thermoplast ist.

**12.** Die Einrichtung nach Anspruch 3:
(a) wobei die Ultraschallenergiebeaufschlagungseinrichtung eine Ultraschallerzeugungseinrichtung zum Erzeugen von Ultraschallenergie und eine Ultraschallübertragungseinrichtung (50) aufweist, die zum Übertragen von Ultraschallenergie auf das Folienmaterial längs der Naht zur Bildung einer Schweißlinie auf einer ersten Seite des Folienmaterials (30, 40) angeordnet ist;
(b) mit einer Einrichtung (60) zum Erhalten einer ersten und einer zweiten Folie (30, 40) beieinander längs der Schweißlinie;
(c) mit einem Amboß (20) zum Halten der Konzentrierungseinrichtung auf einer zweiten Seite der Schweißlinie.

**13.** Die Einrichtung nach Anspruch 12, wobei die Einrichtung zum Anordnen und Halten die Übertragungseinrichtung (50; 120) und die Konzentrierungseinrichtung (12; 82) bei Beendigung der Schweißungen aus dem Kontakt mit dem Folienmaterial (30, 40; 100, 110) zurückzieht; und
die Konzentrierungseinrichtung (12; 82) eine solche Gestalt hat, daß sie beim Abkühlen des Folienmaterials das Selbstablösen von dem Folienmaterial (30, 40; 100, 110) ermöglicht.

**14.** Die Einrichtung nach Anspruch 13, wobei die Konzentrierungseinrichtung einen konischen Vorsprung (12; 82) entsprechend jedem Schweißpunkt aufweist, wobei die konischen Vorsprünge eine solche Gestalt haben, daß sie sich selbsttätig von dem Folienmaterial (30, 40; 100, 110) lösen.

**15.** Die Einrichtung nach Anspruch 14, wobei das Folienmaterial ein Thermoplast ist.

**16.** Die Einrichtung nach Anspruch 14, wobei die Reservoireinrichtung eine Mehrzahl von Reservoirbereichen (14) aufweist, die entlang des Ambosses abwechselnd mit den konischen Vorsprüngen verteilt sind.

**17.** Die Einrichtung nach Anspruch 16, wobei die Reservoirbereiche (14) halbkugelförmige Gestalt haben.

**18.** Die Einrichtung nach Anspruch 16, wobei die Einrichtung zum Anordnen und Halten die Übertragungseinrichtung (50; 120) zum Kontakt mit dem Folienmaterial (30, 40; 100, 110) in einer Richtung, die im wesentlichen senkrecht zu der durch das Material festgelegten Ebene ist, absenkt.

**19.** Die Einrichtung nach Anspruch 13, wobei die Einrichtung zum Anordnen und Halten den Amboß (20; 90) nur in einer seitlichen Richtung im wesentlichen parallel zu der Schweißnaht verschiebt; und
die Konzentrierungseinrichtung (12; 82) und die Reservoireinrichtung (14; 26) eine solche Form haben, daß sie sich durch die seitliche Bewegung leicht von dem geschweißten Folienmaterial (30, 40; 100, 110) trennen.

**20.** Die Einrichtung nach Anspruch 16, wobei die Einrichtung zum Anordnen und Halten den Amboß (20; 90) nur in einer seitlichen Richtung im wesentlichen parallel zu der Schweißnaht bewegt; und
die konischen Vorsprünge (12; 82) und die Reservoirbereiche (14; 26) eine solche Gestalt haben, daß sie sich durch die seitliche Bewegung leicht von dem verschweißten Folienmaterial (30, 40; 100, 110) trennen.

**21.** Die Einrichtung nach Anspruch 20, wobei die Reservoireinrichtung eine Mulde (22, 24) bei den konischen Vorsprüngen (12) im wesentlichen parallel zu der Schweißnaht aufweist; und
die Mulde (22, 24) mit den Reservoirbereichen (26) verbunden ist und die Reservoirbereiche (26) das verdrängte Material in die Mulde (22, 24) leiten.

**22.** Die Einrichtung nach Anspruch 21, wobei eine Mulde (22, 24) auf jeder Seite der Schweißnaht vorgesehen ist.

**23.** Die Einrichtung nach Anspruch 16, wobei das Volumen der Reservoirbereiche (26) wenigstens das 1 1/3fache des Volumens der konischen Vorsprünge (12) ist.

**24.** Die Einrichtung nach Anspruch 22, wobei das Volumen der Mulden (22, 24) und der Reservoirbereiche (26) wenigstens das 1 1/3fache des Volumens der konischen Vorsprünge (12) ist.

**25.** Die Einrichtung nach Anspruch 14, mit ferner einer Temperatursteuerungseinrichtung (28) zum Kühlen der konischen Vorsprünge (12), um ein Festkleben des Folienmaterials (30, 40) daran zu verhindern.

**26.** Die Einrichtung nach Anspruch 25, wobei die Temperatursteuerungseinrichtung Kühlkanäle (28) innerhalb des Ambosses (20) aufweist.

**27.** Die Einrichtung nach Anspruch 16, wobei die Reservoirbereiche (14; 26) und die konischen Vorsprünge (12) einteilig als eine Schweißspitze (10) ausgebildet sind.

**28.** Die Einrichtung nach Anspruch 27, wobei die Schweißspitze (10) einteilig mit dem Amboß (20) ausgebildet ist.

**29.** Die Einrichtung nach Anspruch 27, wobei die Schweißspitze 10 hart anodisiert ist.

**30.** Verfahren zum Punktschweißen von Folienmaterial (30, 40; 100, 110) wobei
durch Ultraschall Schwingungsenergie auf das Folienmaterial (30, 40; 100, 110) aufgebracht wird, um das Material zu erhitzen; und
die Schwingungsenergie auf Punkte, die verschweißt werden sollen, konzentriert wird;
dadurch gekennzeichnet,
daß Reservoire (14; 26; 89) in der Nähe der Punkte bereitet werden, um das Verdrängen von schmelzflüssigem Material zu erleichtern, das durch die Erhitzung erzeugt wurde, um die sich ergebenden Schweißungen zu verstärken.

FIG. 1

FIG. 2

FIG. 3

FIG. 4

*FIG. 5*

$$\frac{TIP \ HEIGHT \ A}{BASE \ B} \ RATIO = 1.2$$

*FIG. 6*

FIG. 7

FIG. 8

**FIG. 9**